# EUROPÄISCHE PATENTSCHRIFT

(11) **EP 1 006 084 B1**
(45) Veröffentlichungstag und Bekanntmachung des Hinweises auf die Patenterteilung: **03.03.2004**
(21) Anmeldenummer: 99122726.5
(22) Anmeldetag: 16.11.1999
(51) Int. Cl.: C02F 1/50, C02F 1/72

(54) **Verfahren zur Vermeidung einer Gewässerkontamination mit ortsfremden Organismen**
Method for preventing contamination of waters by foreign organisms
Procédé pour empêcher la contamination des eaux par des organismes étrangers

(30) Priorität: 04.12.1998 DE 19856071
(43) Veröffentlichungstag der Anmeldung: 07.06.2000
(73) Patentinhaber: Degussa AG, 40474 Düsseldorf (DE)
(72) Erfinder: Fuchs, Rainer, Dr., 63776 Mömbris (DE); Huss, Michael, 65760 Eschborn (DE); Werle, Peter, Dr., 63571 Gelnhausen (DE)

(56) Entgegenhaltungen:
- WO-A-97/08100

## Beschreibung

Die Erfindung betrifft ein Verfahren zur Vermeidung einer Kontamination schiffbarer Gewässer mit Organismen aus der Reihe von Zooplankton einschließlich deren Epifauna und Phytoplankton einschließlich deren Dauerstadien (Cysten), welche mit dem Ballastwasser von Schiffen aufgenommen und beim Löschen des Ballastwassers an einen anderen Ort transferiert werden. Das Verfahren umfaßt die Zugabe eines eine Persauerstoffverbindung enthaltenden Mittels zum Ballastwasser, Einwirkenlassen des Mittels in einer solchen Konzentration und über eine solche Zeit bis die Organismen im wesentlichen abgetötet sind und Einleiten des so behandelten Ballastwassers in das Gewässer.

Die Schifffahrt hat in den letzten Jahren erhebliche Strukturveränderungen erfahren. Insbesondere in der Container-Schifffahrt sind Schiffsgrößen, Liegezeiten, Beladungsstrategien und damit die Ballastwassermengen, ihre Verweilzeiten und ihre Mischungsverhältnisse in Hafen- und Küstengebieten erheblich verändert worden, so daß neue Szenarien entstanden sind, die neue Risiken für den Transfer von exotischen Arten und humanpathogenen Keimen beinhalten. Gerade in den letzten Jahren wurde anhand drastischer Beispiele belegt, das derartige Organismen mit den Ballastwassern von Schiffen mit weitreichenden Konsequenzen für die Ökologie und Gesundheit an andere Orte transferiert werden. Ein Beispiel ist die Einstellung der Zebramuschel in die großen Seen Nordamerikas. Diese hat sowohl zu einer Veränderung des Nahrungsgefüges mit Konsequenzen für die Fischerei und den Tourismus geführt als auch die Energiewirtschaft mit hohen Kosten zur Bekämpfung der Muschel in Kühlkreisläufen in Kraftwerken belastet. Nachhaltige und teilweise irreparable Langzeitschäden verursacht auch der massive Transfer von Dauercysten toxischer Algen, die nicht nur zu unerwünschten Blüten führt, sondern auch in vielen Küstenregionen die Muschel- und Austernzuchten gefährden. Schließlich hat der Transfer einer der Quallen nahestehenden Art ins Schwarze Meer vor wenigen Jahren zum völligen Zusammenbruch der Sardinenfischerei geführt. Auch der interkontinentale Transfer infektionsfähiger humanpathologischer Keime, wie die Vibrio Cholearae, Serotyp 01 L wurde vom Institut for Molekular Biology, Baltimore, USA bewiesen. Diese Beispiele zeigen, daß ein dringender Handlungsbedarf besteht, Maßnahmen zu entwickeln, das Risiko eines Transfers exotischer pflanzlicher und tierischer Organismen sowie humanpathogener Keime mit dem Ballastwasser von Schiffen zu reduzieren.

Es hat nicht an Bemühungen gefehlt, für die Behandlung von Ballastwasser von Schiffen geeignete Techniken zu erarbeiten. Diese könnten sich wegen zu geringer Effektivität und/oder anhaftender Mängel nicht durchsetzen. Durch Behandlung des Wassers mit starker UV-Strahlung lassen sich zwar Mikroorganismen abtöten, nicht aber größere im Zooplankton enthaltene Organismen, wie Artemia, Krabben, Muscheln sowie deren Eier. Die UV-Technik macht zudem ein aufwendiges Umpumpen des Ballastwassers erforderlich.

Ozon ist zwar ein wirksames Biozid, jedoch erfordert eine Ozonierung des Ballastwassers von Schiffen einen zu hohen technischen Aufwand. Einer Behandlung des Ballastwassers mit Hypochlorit stehen die Nachteile der Bildung chlororganischer Verbindungen, die geringe Stabilität des Hypochlorits sowie dessen Korrosivität entgegen.

Es sind zwar viele organische Verbindungen bekannt, welche eine hohe biozide Wirksamkeit aufweisen, jedoch ist deren Langzeitwirkung oder deren hohe Stabilität für eine Anwendung in Ballastwässern nicht gewünscht: Nach der Behandlung sollten die Biozide mit dem Ballastwasser in weitgehend abgebauter und ökologisch unbedenklicher Form dem Gewässer zugeführt werden können. Die Fahrzeiten eines Schiffes und damit Behandlungsdauer des Ballastwassers können zwischen wenigen Tagen und vielen Wochen liegen, so daß eine Kontrolle des Rest-Biozidgehalts nicht mehr gewährleistet ist.

Es ist bekannt, daß Wasserstoffperoxid, das in Wasser und Sauerstoff zerfällt, gegenüber einigen Mikroorganismen zwar eine biozide Wirkung, meistens aber nur eine biostatische Wirkung aufweist. Das Oxidationspotential von Wasserstoffperoxid ist im allgemeinen zu gering, um Organismen des Zooplanktons wirksam zu schädigen oder zu töten. In der US-Patentschrift 5,256,423 wird ein Verfahren zur Vermeidung einer Kontamination schiffbarer Gewässer durch Cysten schädlichen Planktons beschrieben, das darin besteht, daß dem Ballastwasser eine wirksame Menge Wasserstoffperoxid zugesetzt wird und das Ballastwasser erst nach einer ausreichend langen Einwirkungszeit, während welcher die Cysten im wesentlichen abgetötet werden, gelöscht wird. Bei den nach diesem Verfahren abtötbaren Cysten handelt es sich um Dauerstadien der zum Phytoplankton gehörenden Algen. Wie die praktische Erfahrung zeigte, ist das Breitenspektrum der Wirkung von Wasserstoffperoxid zur Behandlung von Ballastwasser nicht ausreichend, weil andere Organismen des Phyto- und Zooplanktons einschließlich deren Dauerstadien, die sich ebenfalls im Ballastwasser befinden, nicht oder nicht ausreichend abgetötet werden.

Aus der US-Patentschrift 5,393,781 ist bekannt, daß sich die Zebramuschel in adulter und larvaler Form durch Kontakt mit Peressigsäure kontrollieren läßt. Hierbei wird eine Peressigsäure enthaltende Lösung in wirksamer Menge, beispielsweise einem Wassereinlauf oder einem Lagerbehälter, einer Wasserbehandlungsanlage zugesetzt. In diesem Dokument wird die Verwendung einer Peressigsäurelösung zur Behandlung von Ballastwasser von Schiffen zwecks Vermeidung eines Transfers artfremder Organismen von einem Gewässer in ein anderes weder offenbart noch nahegelegt. Es wird auch nicht offenbart, ob und in welchem Umfang die Eier von Zebramuscheln sowie anderen Organismen des Zooplanktons einschließlich deren Epifauna durch Peressigsäure getötet werden.

Aufgabe der vorliegenden Erfindung ist demgemäß, ein Verfahren aufzuzeigen, einen Transfer von schädlichen Organismen aus der Reihe des Zooplanktons einschließlich deren Epifauna und Phytoplanktons einschließlich deren Dauerstadien mit dem Ballastwasser von Schiffen wirksam zu vermeiden. Das Verfahren sollte es ermöglichen, außer der bekannten Bekämpfung von Cysten und der Zebramuschel andere mit dem Ballastwasser aufgenommene Organismen wirksam abzutöten. Gemäß einer weiteren Aufgabe sollte das Verfahren unter Verwendung eines solchen Mittels durchgeführt werden können, das ausreichend rasch zersetzt wird, so daß beim Löschen des Ballastwassers keine ökotoxikologischen Probleme auftreten.

Gefunden wurde ein Verfahren zur Vermeidung einer Kontamination schiffbarer Gewässer mit Organismen aus der Reihe von Zooplankton einschließlich deren Epifauna und Phytoplankton einschließlich deren Dauerstadien (Cysten), welche mit dem Ballastwasser von Schiffen aufgenommen und beim Löschen des Ballastwassers an einen anderen Ort transferiert werden, umfassend Zugeben eines eine Persauerstoffverbindung enthaltenden Mittels zum Ballastwasser, Einwirkenlassen des Mittels, bis die Organismen im wesentlichen abgetötet sind und Einleiten des so behandelten Ballastwassers in das Gewässer, das dadurch gekennzeichnet ist, daß das Mittel als Persauerstoffverbindung eine wasserlösliche Percarbonsäure mit 1 bis 6 C-Atomen enthält und daß man das Mittel in einer Menge entsprechend 0,1 bis 200 mg Percarbonsäure pro l Ballastwasser zugibt.

Die Unteransprüche richten sich auf bevorzugte Ausführungsformen.

Unter dem Plankton wird die Gesamtheit der im Wasser schwebenden tierischen und pflanzlichen Lebewesen in allen ihren Lebensformen verstanden. Beim Zooplankton sind somit Organismen in der Eiform, Larvenform und adulten Form zu verstehen. Unter den Begriff des "Phytoplanktons" werden auch die Dauerstadien der Organismen, wie die Cysten, verstanden. Bei den im Ballastwasser abzutötenden Organismen handelt es sich vorrangig um Vertreter folgender taxonomischer Gruppen: Einzellige Algen, deren Physiologie denen von toxischen Algen der red-tides ähnelt. Bei den abzutötenden Organismen des Zooplanktons handelt es sich vorrangig um Copepoden und ihre Larvenstadien, Vertretern der vagielen Benthosfauna, worunter Crustacea unterschiedlicher Altersstufen zu zählen sind, sowie Larven- und Eistadien von Muscheln, Crustaceen und Fischen; auch Organismen aus der Reihe der Hohltiere, Räder- und Manteltiere, Flügelschnecken sowie Larvenstadien von Schwämmen, Schnurwürmern, Weichtieren, Ringelwürmern, Moostierchen und Stachelhäutern können im Ballastwasser enthalten sein - eine Tötung dieser Organismen im Ballastwasser ist zur Vermeidung eines Transfers gleichfalls erwünscht.

Es wurde gefunden, daß durch die Behandlung von Ballastwasser mit einer Percarbonsäure, auch als Peroxycarbonsäure bezeichnet, sehr unterschiedliche Organismen der gattungsgemäßen Art abgetötet werden. Die Percarbonsäure wirkt als Biozid und weist ein breites Wirkungsspektrum auf. Der Begriff "im wesentlichen abgetötet" bedeutet eine Abtötungsrate von im allgemeinen mindestens 90 %, vorzugsweise über 99 % und eine Reduzierung der Schlüpfrate von Eiern um mindestens 50 %. Obgleich in vitro problemlos eine 100 %ige Tötungsrate erzielt werden kann, ist im Hinblick auf die Größe der Ballastkammern im Schiff, den dabei nicht auszuschließenden Toträumen und einer gegebenenfalls unvollständigen Durchmischung der kleinen Menge des bioziden Mittels mit der großen Menge Ballastwasser eine 100 %ige Tötungsrate in Praxis nicht immer gewährleistet, aber auch nicht unbedingt erforderlich.

Das dem Ballastwasser zuzusetzende biozide Mittel kann eine oder mehrere Percarbonsäuren enthalten. Üblicherweise handelt es sich bei diesem Mittel um eine wäßrige Lösung, welche außer der einen oder den mehreren Percarbonsäuren zusätzlich andere wirksame Biozide und/oder andere Hilfsstoffe, wie beispielsweise Tenside, enthalten kann.

Die erfindungsgemäß zu verwendenden Mittel enthalten eine wasserlösliche Percarbonsäure mit 1 bis 6, vorzugsweise 1 bis 3 Kohlenstoffatomen. Die Percarbonsäure kann eine oder zwei Peroxycarboxylgruppen aufweisen und bei Bedarf auch eine oder zwei Hydroxylgruppen. Beispiele geeigneter Percarbonsäuren sind Perameisensäure, Peressigsäure, Perpropionsäure, Permilchssäure, Perweinsäure, Mono- und Diperoxybernsteinsäure, Mono- und Diperoxyglutarsäure sowie Mono- und Diperoxyadipinsäure. Besonders bevorzugt enthalten die zu verwendeten bioziden Mittel Peressigsäure, Perameisensäure, Perpropionsäure oder Gemische dieser Percarbonsäure, insbesondere Gemische aus Peressigsäure und Perameisensäure. Eine wirksame Persäurekombination enthält mindestens zwei der zuvor genannten Persäuren von Dicarbonsäuren.

Üblicherweise enthält das eine oder mehrere Percarbonsäure enthaltende biozide Mittel zusätzlich Wasserstoffperoxid sowie die in den anwesenden Percarbonsäuren zugrundeliegenden Carbonsäuren. Derartige Gemische resultieren aus der Herstellung der Percarbonsäure enthaltenden Mittel durch Umsetzung einer oder mehrerer Carbonsäuren mit einer wäßrigen Wasserstoffperoxidlösung. Ein so erhältliches Mittel kann vor oder nach Erreichen des sich einstellenden Gleichgewichts verwendet werden. Besonders bevorzugt wird ein Mittel auf der Basis einer sogenannten Gleichgewichtspercarbonsäurelösung verwendet, insbesondere eine Gleichgewichtsperessigsäurelösung, welcher vor der Verwendung ein oder mehrere andere biozidwirksame Komponenten und/oder Hilfsmittel zugegeben wurden.

Gemäß einer bevorzugten Ausführungsform wird als biozides Mittel eine Peressigsäure, Perameisensäure, Essigsäure, Ameisensäure, Wasserstoffperoxid und Wasser in einer Gesamtmenge von mindestens 95 Gew.-% enthaltende Lösung verwendet. Herstellungsbedingt kann eine solche Lösung auch einen mineralsauren Katalysator sowie Aktivsauerstoffstabilisatoren enthalten. Eine derartige Lösung ist in einfacher Weise erhältlich durch Zugabe von Ameisensäure zu einer Peressigsäure, Essigsäure, Wasserstoffperoxid und Wasser enthaltenden Lösung, beispielsweise einer 1 bis 35 gew.-%igen, insbesondere 1 bis 15 gew.-%igen Gleichgewichtsperessigsäure oder durch Zugabe eines wasserlöslichen Formiats zu einer Mineralsäure als Katalysator enthaltenden Gleichgewichtsperessigsäurelösung. Perameisensäure zeigt gegenüber Peressigsäure eine höhere Wirksamkeit, jedoch auch eine höhere Zersetzlichkeit. Zweckmäßigerweise wird daher Ameisensäure erst vor dem Gebrauch der Peressigsäure enthaltenden Lösung zugesetzt und das Gemisch nach einer einige Stunden dauernden Reaktionszeit dem Ballastwasser zugesetzt. Es ist auch möglich, eine Peressigsäure als einzige Percarbonsäure enthaltende Lösung und Ameisensäure getrennt voneinander dem Ballastwasser zuzusetzen; die Effizienz dieser Kombination ist zwar höher als jene der ausschließlich Peressigsäure enthaltenden Lösung, jedoch geringer als jene, welche unter Verwendung einer Peressigsäure und Perameisensäure enthaltenden Lösung erzielt wird.

Anstelle von Ameisensäure können dem Carbonsäure enthaltenden Mittel oder unmittelbar dem Ballastwasser auch andere biozide Stoffe zugesetzt werden. Geeignete Biozide dieser Art sind acroleinabspaltende Acetale, beispielsweise 2-Vinyl-1,3-Dioxolan oder 2-Vinyl-1,3-dioxan. Während der Säuregehalt einer Percarbonsäurelösung ausreicht, um das Acetal zu spalten, ist es zweckmäßig, im Falle der direkten Zugabe des Acetals zum Ballastwasser das Acetal in Kombination mit einer Säure oder einem säureabspaltenden Mittel einzusetzen.

Gemäß einer weiteren Ausführungsform wird dem Ballastwasser außer einem Percarbonsäure enthaltenden Mittel in geringer Menge ein Alkalimetallcyanid zugesetzt. Zweckmäßigerweise wird das Cyanid in einer Menge von etwa 0,1 bis 20 mg pro l Ballastwasser verwendet. Die Einsatzmenge des Percarbonsäure enthaltenden Mittels, dem bei Bedarf auch das Cyanid unmittelbar zugegeben werden kann, liegt im Bereich von 0,1 bis 200 mg, insbesondere 1 bis 100 mg und besonders bevorzugt 1 bis 30 mg Percarbonsäure pro l Ballastwasser. Gemäß einer besonders bevorzugten Ausführungsform der kombinierten Verwendung einer Percarbonsäurelösung und eines Cyanids werden pro 1 Ballastwasser 5 bis 100 mg einer 1 bis 15 gew.-%igen Gleichgewichtsperessigsäure und zusammen mit dieser oder getrennt hiervon, zeitgleich oder zeitverschoben, 1 bis 5 mg Cyanid dem Ballastwasser zugesetzt.

Es wurde gefunden, daß die kombinierte Verwendung eines Percarbonsäure enthaltenden Mittels und eines Cyanids zu einem synergistischen Effekt führt. Während die Eier mancher zum Zooplankton gehörenden Organismen weder durch die alleinige Verwendung einer Percarbonsäure enthaltenden Lösung noch durch die Verwendung eines Cyanids befriedigend abgetötet werden, wirkt die kombinierte Verwendung der beiden Stoffe sehr effektiv. Durch die genannte Kombination ist es auch möglich, die Konzentration von Percarbonsäure zu reduzieren. Während die alleinige Verwendung eines .Cyanids eine wirksame Abtötung adulter Tiere bewirkt, leben bei einigen Organismen die Eier weiter; andererseits werden durch die alleinige Verwendung einer Percarbonsäure adulte Tiere einiger Organismen unvollständig abgetötet, wohl aber die Eier derselben.

Bei der kombinierten Verwendung einer Gleichgewichtsperessigsäure und Ameisensäure, wobei, wie zuvor ausgeführt, die Ameisensäure unmittelbar der Peressigsäure oder neben dieser dem Ballastwasser zugesetzt werden kann, entspricht die Einsatzmenge an Ameisensäure 10 bis 1000 Gew.-%, bezogen auf die Summe aus Peressigsäure und Essigsäure.

Dem Ballastwasser kann das Percarbonsäure enthaltende Mittel oder eine Kombination desselben mit weiteren Bioziden durch einmalige oder mehrmalige Zugabe zugesetzt werden. Soweit erforderlich, wird ein bestimmter Gehalt an Percarbonsäure im Ballastwasser aufrechterhalten, bis im wesentlichen alle Organismen in adulter, larvaler oder Eiform abgetötet sind. Nach Zugabe des biozid wirksamen Mittels wird das Ballastwasser solange in den Ballasträumen des Schiffes gehalten, bis die Abtötung im wesentlichen vollständig ist; erst danach wird das Ballastwasser gelöscht und dem Gewässer zugeführt. Gemäß einer alternativen Verfahrensweise kann das Ballastwasser im Hafenbereich auch unmittelbar einer dafür vorgesehenen Tankanlage zugeführt und in dieser erfindungsgemäß behandelt werden.

Das erfindungsgemäße Verfahren erlaubt es, den Transfer unerwünschter Organismen von einem Ort an einen anderen wirksam zu vermeiden. Die zu verwendenden Mittel werden in einer solchen Konzentration eingesetzt, daß sie nach Erfüllung ihrer Aufgabe entweder abgebaut sind, oder als ökotoxikologischer Stoff abgelassen werden können. Die erfindungsgemäß zu verwendenden bioziden Stoffe werden zweckmäßigerweise in einer solchen Menge eingesetzt, daß nach.der vorgesehenen Fahrzeit die Population der Organismen im Ballastwasser abgetötet ist. Bei kurzer Fahrdauer wird demgemäß die Konzentration an wirksamen Bioziden höher sein als bei langer Fahrzeit. Auch im Falle der kombinierten Verwendung einer Percarbonsäure enthaltenden Lösung und eines Cyanids wird eine zu hohe Konzentration an Cyanid im abzulassenden Ballastwasser dadurch vermieden, daß das Cyanid durch die anwesende Percarbonsäure zu unschädlichen Stoffen oxidiert wird.

Die nachfolgenden Beispiele zeigen die prinzipielle Wirksamkeit der Percarbonsäure enthaltenden Lösungen auf die Überlebensrate ausgewählter Testorganismen unter definierten Bedingungen.

### Beispiele B1 bis B6 und Vergleichsbeispiele VB1 bis VB4

Versuche wurden an Artemia salina (Krebse) als Testorganismus durchgeführt, und zwar im Ei-, Larven und adulten Lebensstadium. Das untersuchte Medium war Nordseewasser mit einer Salinität von 3,3 %, die Festtemperatur war Raumtemperatur (ca. 20 °C). Die adulten Artemien wurden in 5 l-Seewasserbecken, die Artemieneier und Larven in 2 ml-Schraubdeckelgläsern gehalten. Aus den Überlebensraten der adulten Tiere und Nauplien über einen Expositionszeitraum von bis zu 72 Stunden wurde die Sterblichkeit ermittelt. Die Versuche wurden in drei Parallelgruppen durchgeführt. Bei den Eiern wurde die Schlüpfrate (%) nach den angegebenen Zeiten ermittelt.

Folgende Wirkstoffe beziehungsweise Kombinationen wurden getestet:
- A:: Gleichgewichtsperessigsäure mit einem Gehalt von 5 Gew.-% Peresssigsäure, 27,5 Gew.-% Wasserstoffperoxid und 5,5 Gew.-% Essigsäure, hergestellt aus Essigsäure und wäßrigem Wasserstoffperoxid in Gegenwart von 2 Gew.-% Schwefelsäure.
- B:: Gemisch einer Lösung gemäß A mit 85 gew.-%iger Ameisensäure im Mischungsverhältnis 1 zu 1. Verwendung des Gemischs nach einer Standzeit von 1 Stunde.
- C:: Gemisch einer Lösung gemäß A mit einer Kombination aus 2-Vinyl-1,3-Dioxolan mit Maleinsäureanhydrid (1:1) (= VDL-K). Mischungsverhältnis von A zu VDL-K gleich 100:1. Verwendung des Gemischs unmittelbar nach Herstellung.

Tabelle 1 zeigt die Sterblichkeit in % von adulten Artemia salina - Mittelwerte aus jeweils drei Parallelversuchen unter Verwendung der Mittel A, B, C und VDL-K in den angegebenen Konzentrationen c (mg/l). Die Kontrolle enthielt 60 Tiere, die mit einem erfindungsgemäßen Mittel .behandelten Proben 150 Tiere.

**Tabelle 1**

| Beispiel | VB 1 | B 1 | B 2 | B 3 | VB 2 |
|---|---|---|---|---|---|
| Zeit (Std.) | Kontrolle | A 2000 mg/l | B 2000 mg/l | C 2000 mg/l | VDL-K 20 mg/l |
| 0,5 | 0 | 0 | 0,7 | 0 | 0 |
| 1 | 0 | 0 | 12,7 | 0 | 0 |
| 2 | 0 | 0 | 73,3 | 8 | 0,7 |
| 3 | 0 | 3 | 96,7 | 18 | 2 |
| 5 | 2 | 9 | 100 | 32 | 8 |
| 7 | 2 | 13 | 100 | 100 | 42 |
| 10 | 3 | 24 | 100 | 100 | 51 |
| 24 | 3 | 84 | 100 | 100 | 100 |
| 48 | 3 | 92 | 100 | 100 | 100 |
| 72 | 3 | 97 | 100 | 100 | 100 |

Tabelle 2 zeigt die Sterblichkeit in % von larvalen Artemia salina (Nauplien) nach Exposition. Angegeben sind Mittelwerte aus 3 Parallelversuchen sowie die Gesamtzahlen der Testorganismen je Versuchsgruppe.

Die Sterblichkeit der adulten Artemia erreichte unter Verwendung der Versuchskonzentration von A erst 97 %, wogegen die Wirkung von B und C viel rascher und quantitativ ist.

**Tabelle 2**

| Beispiel | VB 3 | B 4 | B 5 | B 6 | VB 4 |
|---|---|---|---|---|---|
| Zeit (Std.) | Kontrolle | A 2000 mg/l | B 2000 mg/l | C 2000 mg/l | VDL-K 20 mg/l |
| | n = 182 | n = 211 | n = 122 | n = 195 | n = 211 |
| 0,5 | 0 | 0 | 0,5 | 0 | 0 |
| 1 | 0 | 0 | 91,6 | 0 | 0 |
| 2 | 0 | 1 | 100 | 2 | 1 |
| 3 | 0 | 1 | 100 | 50 | 21 |
| 5 | 0 | 23 | 100 | 100 | 97 |
| 10 | 0,5 | 73 | 100 | 100 | 100 |
| 24 | 0,5 | 100 | 100 | 100 | 100 |
| 48 | 0,5 | 100 | 100 | 100 | 100 |
| 72 | 0,5 | 100 | 100 | 100 | 100 |

### Beispiel 7

Bei Exposition von Dauereiern der Artemia salina mit den Wirkstoffen A, B und C und den zuvor angegebenen Wirkstoffkonzentrationen findet keine Larvenentwicklung statt.

### Beispiel 8

Als Testorganismen wurden adulte Garnelen (Mysis sp) eingesetzt und dem Wirkstoff gemäß A exponiert (c = 2000 mg/l). Bereits nach 0,5 Std. war die Sterblichkeit 100 %.

### Beispiele 9 und 10

Als Wirkstoffe wurden eingesetzt: Natriumcyanid und die zuvor verwendete Gleichgewichtsperessigsäurelösung (G-PES) (= A). In den Beispielen 9 und 10 wurden das Cyanid (CN) und die G-PES separat, aber gleichzeitig dem Wasser mit den adulten Artemien, Nauplien beziehungsweise Dauereiern der Artemien zugesetzt. Die Einsatzmengen pro 1 Wasser betrugen in Beispiel 9 3,3 mg NaCN und 10 mg G-PES (Formulierung A) und in Beispiel 10 46,3 mg NaCN und 50 mg G-PES (Formulierung A). Die Tabelle 3 zeigt die Ergebnisse - Sterblichkeit und Schlüpfrate in %.

**Tabelle 3:**

| Beispiel | 9 a | 9 b | 10*) |
|---|---|---|---|
| Test-Artemia | adulte Nauplien | | Eier |
| Zeit (Std.) | Sterblichkeit (%) | | Schlüpfrate (%) |
| 1 | 0 | 0 | 0 |
| 2 | 0 | 2,1 | |
| 5 | 13,3 | 12,8 | |
| 16 | 66,7 | 97,9 | 20 |
| 24 | 96,7 | 100,0 | 30 |

| | | | |
|---|---|---|---|
| *) Kontrollschlüpfrate ohne Wirksubstanzen: 1 h 40 %; 14 h 90 %; 24 h 95 % | | | |

## Patentansprüche

1. Verfahren zur Vermeidung einer Kontamination schiffbarer Gewässer mit Organismen aus der Reihe von Zooplankton einschließlich deren Epifauna und Phytoplankton einschließlich deren Dauerstadien (Cysten), welche mit dem Ballastwasser von Schiffen aufgenommen und beim Löschen des Ballastwassers an einen anderen Ort transferiert werden, umfassend Zugeben eines eine Persauerstoffverbindung enthaltenden Mittels zum Ballastwasser, Einwirkenlassen des Mittels, bis die Organismen im wesentlichen abgetötet sind und Einleiten des so behandelten Ballastwassers in das Gewässer,
**dadurch gekennzeichnet,**
**daß** das Mittel als Persauerstoffverbindung eine wasserlösliche Percarbonsäure mit 1 bis 6 C-Atomen enthält und daß man das Mittel in einer Menge entsprechend 0,1 bis 200 mg Percarbonsäure pro 1 Ballastwasser zugibt.

2. Verfahren nach Anspruch 1,
**dadurch gekennzeichnet,**
**daß** man ein Mittel verwendet, das mindestens eine Percarbonsäure aus der Reihe Perameisensäure, Peressigsäure und Perpropionsäure und zusätzlich Wasserstoffperoxid enthaltendes Mittel enthält.

3. Verfahren nach Anspruch 1 oder 2,
**dadurch gekennzeichnet,**
**daß** man ein Mittel auf der Basis einer sogenannten Gleichgewichtsperessigsäure mit einem Peressigsäuregehalt von 1 bis 10 Gew.-% verwendet.

4. Verfahren nach einem der Ansprüche 1 bis 3,
**dadurch gekennzeichnet,**
**daß** man ein Peressigsäure, Perameisensäure, Essigsäure, Ameisensäure, Wasserstoffperoxid und Wasser in einer Gesamtmenge von mindestens 95 Gew.-% enthaltendes Mittel verwendet.

5. Verfahren nach einem der Ansprüche 1 bis 4,
**dadurch gekennzeichnet,**
**daß** man dem Ballastwasser zusätzlich zu dem eine Percarbonsäure enthaltenden Mittel eine oder mehrere andere biozide Verbindungen zusetzt oder daß man die anderen bioziden Verbindungen bereits dem Percarbonsäure enthaltenden Mittel vor dessen Zugabe zum Ballastwasser zugibt.

6. Verfahren nach Anspruch 5,
**dadurch gekennzeichnet,**
**daß** man als andere biozide Verbindung Ameisensäure, ein Cyanid oder ein Acrolein freisetzendes Acetal einsetzt.

7. Verfahren nach Anspruch 5 oder 6,
**dadurch gekennzeichnet,**
**daß** man Cyanid in einer Menge von 0,1 bis 20 mg pro 1 Ballastwasser verwendet.

8. Verfahren nach einem der Ansprüche 1 bis 7,
**dadurch gekennzeichnet,**
**daß** man pro 1 Ballastwasser 5 bis 100 mg einer 1 bis 15 gew.-%igen Gleichgewichtsperessigsäure und zusammen mit dieser Gleichgewichtsperessigsäure oder getrennt .hiervon, zeitgleich oder zeitverschoben, 1 bis 5 mg Cyanid dem Ballastwasser zusetzt.

9. Verfahren nach einem der Ansprüche 1 bis 8,
**dadurch gekennzeichnet,**
**daß** man das Percarbonsäure enthaltende Mittel und gegebenenfalls die zusätzlich dem Ballastwasser zugesetzte(n) andere(n) biozide(n) Verbindung(en) vor dem Einleiten des Ballastwassers in das Gewässer solange einwirken läßt und bei Bedarf das Mittel und die anderen bioziden Verbindungen nachdosiert, bis mindestens 99 % der Organismen abgetötet sind.

10. Verfahren nach einem der Ansprüche 1 bis 9,
**dadurch gekennzeichnet,**
**daß** man die Behandlung des Ballastwassers zwecks Abtötung der Organismen an Bord des Schiffes, insbesondere während der Fahrt desselben, oder nach Löschen des Ballastwassers in einer Behandlungsanlage an Land durchführt, und das behandelte Ballastwasser unfiltriert oder filtriert in das Gewässer einleitet.

## Claims

1. Process for preventing contamination of navigable waters with organisms from the series of zooplankton including the epifauna thereof and phytoplankton including the resting stages thereof (cysts) which are taken up with the ballast water of ships and transferred to another place when the ballast water is discharged, comprising the addition of an agent containing a peroxygen compound to the ballast water, allowing the agent to react until the organisms are substantially destroyed, and introduction of the ballast water thus treated into the aquatic environment,
**characterised in that**
the agent contains, as peroxygen compound, a watersoluble percarboxylic acid with 1 to 6 C atoms and **in that** the agent is added in a quantity corresponding to 0.1 to 200 mg of percarboxylic acid per litre of ballast water.

2. Process according to claim 1,
**characterised in that**
the agent used contains at least one percarboxylic acid from the series comprising performic acid, peracetic acid and perpropionic acid and also an agent containing hydrogen peroxide.

3. Process according to claim 1 or 2,
**characterised in that**
the agent used is based on a so-called equilibrium peracetic acid with a peracetic acid content of 1 to 10 wt.%.

4. Process according to one of claims 1 to 3,
**characterised in that**
an agent containing peracetic acid, performic acid, acetic acid, formic acid, hydrogen peroxide and water in a total quantity of at least 95 wt.% is used.

5. Process according to one of claims 1 to 4,
**characterised in that**
in addition to the agent containing a percarboxylic acid, one or more other biocidal compounds are added to the ballast water or **in that** the other biocidal compounds are already added to the agent containing percarboxylic acid before the addition thereof to the ballast water.

6. Process according to claim 5,
**characterised in that**
the other biocidal compound used is formic acid, a cyanide or an acrolein-liberating acetal.

7. Process according to claim 5 or 6,
**characterised in that**
cyanide is used in a quantity of 0.1 to 20 mg per litre of ballast water.

8. Process according to one of claims 1 to 7,
**characterised in that**,
per litre of ballast water, 5 to 100 mg of a 1 to 15 wt.% equilibrium peracetic acid and, together with said equilibrium peracetic acid or separately, at the same time or after a certain delay, 1 to 5 mg of cyanide are added to the ballast water.

9. Process according to one of claims 1 to 8,
**characterised in that**
the agent containing percarboxylic acid and optionally the other biocidal compound(s) also added to the ballast water are allowed to react for such a time before the ballast water is introduced into the aquatic environment and, if necessary, the agent and the other biocidal compounds are metered in afterwards, until at least 99% of the organisms are destroyed.

10. Process according to one of claims 1 to 9,
**characterised in that**
the treatment of the ballast water for the purpose of destroying the organisms is carried out on board the ship, particularly during the journey thereof or, after the ballast water has been discharged, in a treatment plant on land, and the treated ballast water is introduced into the aquatic environment in the unfiltered or filtered state.

## Revendications

1. Procédé pour empêcher une contamination des eaux de navigation par des organismes de la famille du zooplancton, y compris leur épifaune et de la famille du phytoplancton, y compris leurs stades dormants (kystes), qui sont collectés avec l'eau de ballast des navires et sont transférés à un autre endroit lors du déchargement de l'eau de ballast, comprenant les étapes consistant à ajouter un produit contenant un composé peroxygène à l'eau de ballast, à laisser agir le produit jusqu'à ce que les organismes aient été pour l'essentiel tués et à déverser l'eau de ballast ainsi traitée dans les eaux,
**caractérisé en ce que**
le produit contient comme composé peroxygène un acide percarbonique hydrosoluble ayant 1 à 6 atomes et on ajoute le produit en une quantité correspondant à 0,1 à 200 mg d'acide percarbonique par litre d'eau de ballast.

2. Procédé selon la revendication 1,
**caractérisé en ce qu'**
on utilise un produit qui contient au moins un acide percarbonique de la famille des acides performiques, des acides peracétiques et des acides perpropioniques, en plus du peroxyde d'hydrogène.

3. Procédé selon la revendication 1 ou 2,
**caractérisé en ce qu'**
on utilise un produit basé sur ce que l'on appelle un acide peracétique équilibré ayant une teneur en acide peracétique de 1 à 10 % en poids

4. Procédé selon l'une des revendications 1 à 3,
**caractérisé en ce qu'**
on utilise un produit contenant de l'acide peracétique, de l'acide performique, de l'acide acétique, de l'acide formique, du peroxyde d'hydrogène et de l'eau en une quantité totale d'au moins 95 % en poids

5. Procédé selon l'une des revendications 1 à 4,
**caractérisé en ce qu'**
on ajoute à l'eau de ballast, outre le produit contenant un acide percarbonique, un ou plusieurs autres composés biocides, ou on ajoute les autres composés biocides au produit contenant de l'acide percarbonique avant leur adjonction à l'eau de ballast.

6. Procédé selon la revendication 5,
**caractérisé en ce qu'**
on utilise en tant qu'autre composé biocide des acides formiques, un cyanure ou un acétal produisant de l'acroléine.

7. Procédé selon la revendication 5 ou 6,
**caractérisé en ce qu'**
on utilise le cyanure en une quantité de 0,1 à 20 mg par litre d'eau de ballast.

8. Procédé selon l'une des revendications 1 à 7,
**caractérisé en ce qu'**
on ajoute à l'eau de ballast, par litre d'eau de ballast, 5 à 100 mg d'un acide peracétique équilibré à 1 à 15 % en poids et avec cet acide peracétique équilibré ou indépendamment de celui-ci, en même temps ou de façon décalée, 1 à 5 mg de cyanure.

9. Procédé selon l'une des revendications 1 à 8,
**caractérisé en ce qu'**
on laisse agir le produit contenant de l'acide percarbonique et, le cas échéant, le(s) autre(s) composé(s) ajouté(s) en supplément à l'eau de ballast avant de déverser l'eau de ballast dans les eaux, et on effectue au besoin un nouveau dosage du produit et des autres composés biocides, jusqu'à ce qu'au moins 99 % des organismes aient été tués.

10. Procédé selon l'une des revendications 1 à 9,
**caractérisé en ce qu'**
on procède au traitement de l'eau de ballast dans le but de tuer les organismes à bord du navire, en particulier pendant son trajet, ou après déchargement de l'eau de ballast dans une installation de traitement à terre, puis l'on déverse l'eau de ballast traitée filtrée ou non filtrée dans l'eau.
